# EUROPEAN PATENT APPLICATION

(11) **EP 4 209 986 A1**
(43) Date of publication of application: **12.07.2023**
(21) Application number: 22207776.0
(22) Date of filing: 16.11.2022
(51) Int. Cl.: G06Q 40/03, G06Q 20/40, G06N 20/00

(54) **METHOD AND APPARATUS FOR ITERATING CREDIT SCORECARD MODEL, ELECTRONIC DEVICE AND STORAGE MEDIUM**

(30) Priority: 07.01.2022 CN 202210018082
(71) Applicant: BEIJING BAIDU NETCOM SCIENCE TECHNOLOGY CO., LTD., Beijing 100085 (CN)
(72) Inventor: CHEN, Cai, Beijing, 100085 (CN); LIU, Haocheng, Beijing, 100085 (CN)
(74) Representative: V.O.

(57) **Abstract**

The present invention provides a method and apparatus for iterating a credit scorecard model, electronic device, and storage medium, and relates to the technical field of machine learning, in particular, to the field of smart finance and risk control technologies. A specific implementation solution includes: dividing multiple to-be-classified samples into a first part sample and a second part sample; classifying the first part sample by using a first credit scorecard model to obtain a first prediction result, and classifying the second part sample by using the first credit scorecard model to obtain a second prediction result; and determining an input sample of a second credit scorecard model based on the first prediction result and the second prediction result, and iterating the first credit scorecard model according to the second prediction result and multiple history samples, to obtain a target credit scorecard model.

## Description

### Technical Field

The present invention relates to the technical field of machine learning, further relates to the field of smart finance and risk control technologies, and in particular, to a method and apparatus for iterating a credit scorecard model, an electronic device and a storage medium.

### Background

A credit guarantee enterprise generally uses a risk control model to perform risk control on services. For example, a credit scorecard model is a common risk control model.

Rejection inference technologies are used for generating samples in related solutions. With the iteration of the risk control model and the increasing of user data, the proportion of performance samples of which loan duration reaches a performance period gradually decreases, and a distinction degree gets lower and lower, resulting in more difficult of an update process of the risk control model.

### Summary

At least some embodiments of the present invention provide a method and apparatus for iterating a credit scorecard model, an electronic device, and a storage medium, so as at least partially to solve the technical problem of a poor iteration effect of a risk control model in the related art.

In an embodiment of the present invention, a method for iterating a credit scorecard model is provided, including: dividing multiple to-be-classified samples into a first part sample and a second part sample; classifying the first part sample by using a first credit scorecard model to obtain a first prediction result, and classifying the second part sample by using the first credit scorecard model to obtain a second prediction result, where the first credit scorecard model is an initial credit scorecard model of a current phase; and determining an input sample of a second credit scorecard model based on the first prediction result and the second prediction result, and iterating the first credit scorecard model according to the second prediction result and multiple history samples, to obtain a target credit scorecard model. The second credit scorecard model is an initial credit scorecard model of a next phase, and the multiple history samples are modeling samples of the first credit scorecard model.

In another embodiment of the present invention, an apparatus for iterating a credit scorecard model is provided, including: a division module, configured to divide multiple to-be-classified samples into a first part sample and a second part sample; a prediction module, configured to classify the first part sample by using a first credit scorecard model to obtain a first prediction result, and classify the second part sample by using the first credit scorecard model to obtain a second prediction result, where the first credit scorecard model is an initial credit scorecard model of a current phase; and a processing module, configured to determine an input sample of a second credit scorecard model based on the first prediction result and the second prediction result, and iterate the first credit scorecard model according to the second prediction result and multiple history samples, to obtain a target credit scorecard model. The second credit scorecard model is an initial credit scorecard model of a next phase, and the multiple history samples are modeling samples of the first credit scorecard model.

In another embodiment of the present invention, an electronic device is provided. The electronic device includes at least one processor and a memory communicatively connected with the at least one processor. The memory is configured to store at least one instruction executable by the at least one processor. The at least one instruction is performed by the at least one processor, to cause the at least one processor to perform the method for iterating the credit scorecard model mentioned above.

In another embodiment of the present invention, a non-transitory computer-readable storage medium storing at least one computer instruction is provided. The at least one computer instruction is used for a computer to perform the method for iterating the credit scorecard model mentioned above.

In another embodiment of the present invention, a computer program product is provided. The computer program product includes a computer program. The method for iterating the credit scorecard model mentioned above is implemented when the computer program is operated by a processor.

In the present invention, the multiple to-be-classified samples are divided into the first part sample and the second part sample. Then, the first part sample is classified by using the first credit scorecard model to obtain the first prediction result, and the second part sample is classified by using the first credit scorecard model to obtain the second prediction result. Finally, the input sample of the second credit scorecard model is determined based on the first prediction result and the second prediction result, and the first credit scorecard model is iterated according to the second prediction result and multiple history samples, to obtain the target credit scorecard model. Therefore, the purpose of obtaining the target credit scorecard model through efficient iteration can be achieved, and the optimization of an iteration effect of the risk control model can be realized, thereby solving the technical problem of a poor iteration effect of the risk control model in the related art.

It is to be understood that, the content described in this section is not intended to identify the key or important features of the embodiments of the present invention, nor is it intended to limit the scope of the present invention. Other features of the present invention will become easy to understand through the following description.

### Brief Description of the Drawings

Drawings are used for better understanding the solution, and are not intended to limit the present invention.
Fig. 1 is a block diagram of a hardware structure of a computer terminal (or a mobile device) configured to implement a method for iterating a credit scorecard model according to an embodiment of the present invention.
Fig. 2 is a flowchart of a method for iterating a credit scorecard model according to an embodiment of the present invention.
Fig. 3 is a schematic diagram of a method for iterating a credit scorecard model according to an embodiment of the present invention.
Fig. 4 is a schematic diagram of a stratified sampling process according to an embodiment of the present invention.
Fig. 5 is a schematic diagram of a flow diversion mechanism according to an embodiment of the present invention.
Fig. 6 is a structural block diagram of an apparatus for iterating a credit scorecard model according to an embodiment of the present invention.

### Detailed Description

Exemplary embodiments of the present invention are described in detail below with reference to the drawings, including various details of the embodiments of the present invention to facilitate understanding, and should be regarded as exemplary. Thus, those of ordinary skilled in the art shall understand that, variations and modifications can be made on the embodiments described herein, without departing from the scope and spirit of the present invention. Likewise, for clarity and conciseness, descriptions of well-known functions and structures are omitted in the following description.

It is to be noted that terms "first", "second" and the like in the description, claims and the above mentioned drawings of the present invention are used for distinguishing similar objects rather than describing a specific sequence or a precedence order. It should be understood that the data used in such a way may be exchanged where appropriate, in order that the embodiments of the present invention described here can be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

Rejection inference technologies are used for generating samples in related solutions. With the iteration and increasing of the risk control model, the proportion of performance samples of which loan duration reaches a performance period gradually decreases. Since a precondition risk control strategy filters a large number of potential bad users, a distinction degree of performance samples gets lower and lower, resulting in more difficult of an update process of the risk control model. For example, after a user applies a loan, the first three repayment periods are performance periods, and the duration of each repayment period is one month. A sample that loan duration reaches three months is the performance sample, and a sample that the loan duration does not reach three months is a non-performance sample. The potential bad users are abnormal users that are identified by the precondition risk control strategy, for example, the abnormal users that are identified by means of credit inquiry.

An embodiment of the present invention provides a method for iterating a credit scorecard model. It is to be noted that the steps shown in the flowchart of the accompanying drawings may be executed in a computer system, such as a set of computer-executable instructions, and although a logical sequence is shown in the flowchart, in some cases, the steps shown or described may be executed in a different order than here.

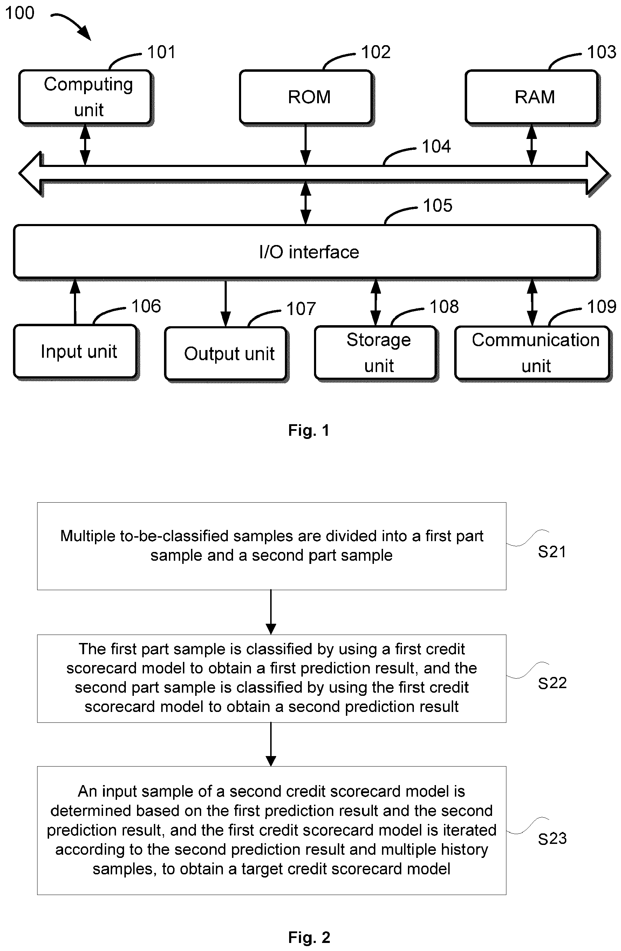

The method embodiment provided in this embodiment of the present invention may be performed in a mobile terminal, a computer terminal, or a similar electronic device. The electronic device is intended to represent various forms of digital computers, such as laptop computers, desktop computers, workbenches, personal digital assistants, servers, blade servers, mainframe computers, and other suitable computers. The electronic device may also express various forms of mobile devices, such as personal digital processing, cellular phones, smart phones, wearable devices, and other similar computing devices. The components shown herein, connections and relationships of the components, and functions of the components are examples, and are not intended to limit the implementation of the present invention described and/or required herein. Fig. 1 is a block diagram of a hardware structure of a computer terminal (or a mobile device) configured to implement a method for iterating a credit scorecard model according to an embodiment of the present invention.

As shown in Fig. 1, the computer terminal 100 includes a computing unit 101. The computing unit may perform various appropriate actions and processing operations according to a computer program stored in a Read-Only Memory (ROM) 102 or a computer program loaded from a storage unit 108 into a Random Access Memory (RAM) 103. In the RAM 103, various programs and data required for the operation of the computer terminal 100 may also be stored. The computing unit 101, the ROM 102, and the RAM 103 are connected with each other by using a bus 104. An Input/Output (I/O) interface 105 is also connected with the bus 104.

Multiple components in the computer terminal 100 are connected with the I/O interface 105, and include: an input unit 106, such as a keyboard and a mouse; an output unit 107, such as various types of displays and loudspeakers; the storage unit 108, such as a disk and an optical disc; and a communication unit 109, such as a network card, a modem, and a wireless communication transceiver. The communication unit 109 allows the computer terminal 100 to exchange information/data with other devices through a computer network, such as the Internet, and/or various telecommunication networks.

The computing unit 101 may be various general and/or special processing assemblies with processing and computing capabilities. Some examples of the computing unit 101 include, but are not limited to, a Central Processing Unit (CPU), a Graphics Processing Unit (GPU), various dedicated Artificial Intelligence (Al) computing chips, various computing units for running machine learning model algorithms, a Digital Signal Processor (DSP), and any appropriate processors, controllers, microcontrollers, and the like. The computing unit 101 performs the method for iterating a credit scorecard model described here. For example, in some embodiments, the method for iterating a credit scorecard model may be implemented as a computer software program, which is tangibly included in a machine-readable medium, such as the storage unit 108. In some embodiments, part or all of the computer programs may be loaded and/or installed on the computer terminal 100 via the ROM 102 and/or the communication unit 109. When the computer program is loaded into the RAM 103 and performed by the computing unit 101, at least one step of the method for iterating the credit scorecard model described here may be performed. Alternatively, in other embodiments, the computing unit 101 may be configured to perform the method for iterating the credit scorecard model in any other suitable manners (for example, by means of firmware).

Various implementations of systems and technologies described here may be implemented in a digital electronic circuit system, an integrated circuit system, a Field Programmable Gate Array (FPGA), an Application-Specific Integrated Circuit (ASIC), an Application-Specific Standard Product (ASSP), a System-On-Chip (SOC), a Load Programmable Logic Device (CPLD), computer hardware, firmware, software, and/or a combination thereof. These various implementations may include: being implemented in at least one computer program, the at least one computer program may be performed and/or interpreted on a programmable system including at least one programmable processor. The programmable processor may be a dedicated or general programmable processor, which can receive data and instructions from a storage system, at least one input device, and at least one output device, and transmit the data and instructions to the storage system, the at least one input device, and the at least one output device.

It is noted herein that, in some optional embodiments, the electronic device shown in Fig. 1 may include a hardware element (including a circuit), a software element (including a computer code stored on the computer-readable medium), or a combination of the hardware element and the software element. It should be noted that, Fig. 1 is an example of a specific example, and is intended to illustrate the types of components that may be present in the above electronic device.

Under the above operation environment, the present invention provides the method for iterating the credit scorecard model shown in Fig. 2. The method may be performed by the computer terminal shown in Fig. 1 or a similar electronic device. Fig. 2 is a flowchart of a method for iterating a credit scorecard model according to an embodiment of the present invention. As shown in Fig. 2, the method may include the following steps.

At step S21, multiple to-be-classified samples are divided into a first part sample and a second part sample.

Optionally, the multiple to-be-classified samples are divided into the first part sample and the second part sample according to a preset division proportion. The preset division proportion may be flexibly set by a risk control service team. For example, the preset division proportion is 9:1. That is, 90% of the to-be-classified samples are divided to the first part sample, and 10% of the to-be-classified samples are divided to the second part sample.

At step S22, the first part sample is classified by using a first credit scorecard model to obtain a first prediction result, and the second part sample is classified by using the first credit scorecard model to obtain a second prediction result.

The first credit scorecard model is an initial credit scorecard model of a current phase.

Specifically, the first credit scorecard model is the initial credit scorecard model of any phase of a pre-loan phase, an in-loan phase, and a post-loan phase in a credit process of a user. In response to the current phase being the pre-loan phase, a next phase is the in-loan phase. In response to the current phase being the in-loan phase, the next phase is the post-loan phase.

Optionally, the first credit scorecard model includes one of the following: an application scorecard model, a behavior scorecard model, and a collection scorecard model. The first credit scorecard model is a binary classification machine learning model. The application scorecard model may be represented as an A card model, the behavior scorecard model may be represented as a B card model, and the collection scorecard model may be represented as a C card model.

Specifically, the application scorecard model is mainly applied in the pre-loan phase. That is, during a processing period of user application, a risk probability of default and delinquency within a certain time period is predicted after the user opens an account. When the user passes prediction verification of the application scorecard model, it is determined that the user may borrow or lend money. When the user does not pass the prediction verification of the application scorecard model, it is determined that the user cannot borrow or lend money.

The behavior scorecard model is mainly applied in the in-loan phase. That is, during an account management period, future credit performance of the user is predicted according to various behavior features historically shown by the user. When the user passes prediction verification of the behavior scorecard model, it indicates that the user has the ability to repay. When the user does not pass the prediction verification of the behavior scorecard model, it indicates that the user does not have the ability to repay. For example, the user borrows money from multiple banks, and the user may be late for repayment, so that it is necessary to take precautions.

The collection scorecard model is mainly applied in the post-loan phase. That is, during the account management period, a probability of adopting a collection strategy is predicted for the overdue user, so that collection measures corresponding to the collection strategy are adopted. When the user passes prediction verification of the collection scorecard model, it indicates that the user may make repayment on schedule. When the user does not pass the prediction verification of the collection scorecard model, it indicates that the user cannot make repayment on schedule, so that the collection measures are required to remind the user for repayment. For example, a text message is sent to remind the user for repayment.

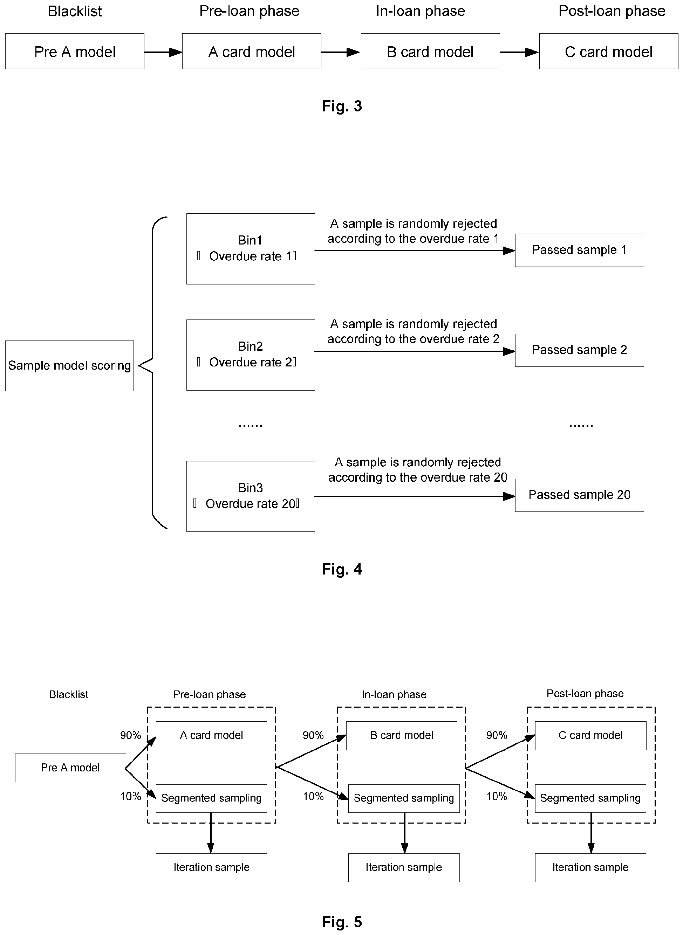

Fig. 3 is a schematic diagram of a method for iterating a credit scorecard model according to an embodiment of the present invention. As shown in Fig. 3, a credit risk control flow mainly includes blacklist, pre-loan, in-loan, and post-loan processes. At a blacklist phase, multiple candidate samples are filtered by using a Pre A model, to obtain the multiple to-be-classified samples. At the pre-loan phase, the A card model is applied. At the in-loan phase, the B card model is applied. At the post-loan phase, the C card model is applied.

Specifically, for an implementation process of classifying the first part sample by using the first credit scorecard model to obtain the first prediction result, and classifying the second part sample by using the first credit scorecard model to obtain the second prediction result, refer to further introduction of this embodiment of the present invention, which is not described again.

At step S23, an input sample of a second credit scorecard model is determined based on the first prediction result and the second prediction result, and the first credit scorecard model is iterated according to the second prediction result and multiple history samples, to obtain a target credit scorecard model.

The second credit scorecard model is an initial credit scorecard model of a next phase, and the multiple history samples are modeling samples of the first credit scorecard model.

For example, in response to the initial credit scorecard model of the current phase being the application scorecard model, the initial credit scorecard model of the next phase is the behavior scorecard model.

For another example, in response to the initial credit scorecard model of the current phase being the behavior scorecard model, the initial credit scorecard model of the next phase is the collection scorecard model.

Specifically, for the implementation process of determining the input sample of the second credit scorecard model based on the first prediction result and the second prediction result, and iterating the first credit scorecard model according to the second prediction result and the multiple history samples, to obtain the target credit scorecard model, refer to further introduction of this embodiment of the present invention, which is not described again.

According to step S21 to step S23 in the present invention, the multiple to-be-classified samples are divided into the first part sample and the second part sample. Then, the first part sample is classified by using the first credit scorecard model to obtain the first prediction result, and the second part sample is classified by using the first credit scorecard model to obtain the second prediction result. Finally, the input sample of the second credit scorecard model is determined based on the first prediction result and the second prediction result, and the first credit scorecard model is iterated according to the second prediction result and the multiple history samples, to obtain the target credit scorecard model. Therefore, the purpose of obtaining the target credit scorecard model through efficient iteration can be achieved, and the optimization of an iteration effect of the risk control model can be realized, thereby solving the technical problem of a poor iteration effect of the risk control model in the related art.

The method for iterating a credit scorecard model in the above embodiment is further described below.

As an optional implementation, the method for iterating the credit scorecard model further includes the following steps.

At step S20, multiple candidate samples are filtered by using a blacklist manner, to obtain the multiple to-be-classified samples.

Specifically, the multiple candidate samples are filtered by using a blacklist library, to obtain the multiple to-be-classified samples. The blacklist library is the Pre A model. For example, the multiple candidate samples are inputted into the Pre A model. If some samples in the blacklist library may be matched with the candidate samples, the candidate samples are filtered. If none sample in the blacklist library may be matched with the candidate samples, the candidate samples are determined as the to-be-classified sample.

Based on step S20, the multiple candidate samples are filtered by using the blacklist manner, to obtain the multiple to-be-classified samples, so that the candidate samples can be effectively selected, and invalid candidate samples are filtered. Therefore, the computation cost of iterating the credit scorecard model can be reduced, and the iteration efficiency can be effectively enhanced.

As an optional implementation, in step S22, an operation of classifying the first part sample by using the first credit scorecard model to obtain the first prediction result, and classifying the second part sample by using the first credit scorecard model to obtain the second prediction result includes the following step.

The first part sample is classified by using the first credit scorecard model to obtain a prediction probability of each sample in the first part sample, and the second part sample is classified by using the first credit scorecard model to obtain a prediction probability of each sample in the second part sample.

For example, when the first credit scorecard model is the application scorecard model, the first part sample is classified by using the application scorecard model to obtain a default probability of each sample in the first part sample, and the second part sample is classified by using the application scorecard model to obtain a default probability of each sample in the second part sample.

For another example, when the first credit scorecard model is the behavior scorecard model, the first part sample is classified by using the behavior scorecard model to obtain a probability that each sample in the first part sample has the ability to repay, and the second part sample is classified by using the behavior scorecard model to obtain a probability that each sample in the second part sample has the ability to repay.

For another example, when the first credit scorecard model is the collection scorecard model, the first part sample is classified by using the collection scorecard model to obtain a probability that the collection strategy is required to be adopted for each sample in the first part sample, and the second part sample is classified by using the collection scorecard model to obtain a probability that the collection strategy is required to be adopted for each sample in the second part sample.

Based on the implementation, the first part sample and the second part sample are classified by using the first credit scorecard model, to obtain the prediction probability of each sample in the first part sample and the second part sample. In this way, the input sample of the initial credit scorecard model of the next phase is determined by using the prediction probability, so as to further optimize the iteration effect.

It is to be noted that, the prediction probability is an optional implementation for obtaining the prediction result, which does not constitute a limitation of the present invention. During actual use, other prediction result manners may also be used. For example, the first part sample is classified by using the first credit scorecard model to obtain a prediction confidence of each sample in the first part sample, and the second part sample is classified by using the first credit scorecard model to obtain a prediction confidence of each sample in the second part sample. Similar to the prediction probability, a value of the prediction confidence ranges from 0 to 1.

As an optional implementation, in step S23, an operation of determining the input sample of the second credit scorecard model based on the first prediction result and the second prediction result includes the following steps.

At step S231, a third part sample is selected from the first part sample by using a comparison result of the prediction probability of each sample in the first part sample and a preset probability threshold.

For example, the preset probability threshold is 0.8. When the first credit scorecard model is the application scorecard model, the first part sample is classified by using the application scorecard model to obtain the default probability of each sample in the first part sample, and samples of which the default probability in the first part sample is less than or equal to 0.8 are determined as the third part sample.

At step S232, a fourth part sample is selected from the second part sample by performing segmented sampling on the prediction probability of each sample in the second part sample.

Specifically, for the implementation of selecting the fourth part sample from the second part sample by performing segmented sampling on the prediction probability of each sample in the second part sample, refer to the further instruction of the following embodiments, which is not described again.

At step S233, the third part sample and the fourth part sample are determined as the input sample of the second credit scorecard model.

Based on step S231 to step S233, the input sample of the initial credit scorecard model of the next phase may be determined based on the first prediction result and the second prediction result, so as to further optimizing the iteration effect.

As an optional implementation, in step S232, an operation of selecting the fourth part sample from the second part sample by performing segmented sampling on the prediction probability of each sample in the second part sample includes the following steps.

At step S2321, multiple overdue rates are determined based on the prediction probability of each sample in the second part sample.

At step S2322, multiple segmented sampling intervals are determined by using the multiple overdue rates.

At step S2323, the fourth part sample is randomly selected from the second part sample according to the overdue rate corresponding to each of the multiple segmented sampling intervals.

Fig. 4 is a schematic diagram of a stratified sampling process according to an embodiment of the present invention. As shown in Fig. 4, 20 overdue rates are determined based on the prediction probability of each sample in the second part sample, that is, overdue rate 1, overdue rate 2,..., overdue rate 20. 20 segmented sampling intervals are determined by using the multiple overdue rates, that is, Bin1:0-0.05, Bin2:0.05-0.1, Bin3:0.1-0.15,..., Bin19:0.9-0.95, Bin20:0.95-1. The fourth part sample is randomly selected from the second part sample according to the overdue rate corresponding to each of 20 segmented sampling intervals. For example, the sample is randomly rejected according to the overdue rate 1, to obtain a passed sample 1. The fourth part sample is jointly composed of the passed sample 1 to the passed sample 20. The fourth part sample is input samples of the behavior scorecard model of the in-loan phase.

By using the pre-loan phase as an example, the second part sample includes 10% of to-be-classified samples. The fourth part sample is randomly selected from the second part sample according to the overdue rate corresponding to each of the multiple segmented sampling intervals. For example, the overdue rate of the segmented sampling interval Bin1 is 5%. Then, 95% of samples are randomly selected from the samples at the segmented sampling interval as the passed sample 1.

Based on step S2321 to step S2323, the multiple overdue rates are determined based on the prediction probability of each sample in the second part sample. Then, the multiple segmented sampling intervals are determined by using the multiple overdue rates. Finally, the fourth part sample is randomly selected from the second part sample according to the overdue rate corresponding to each of the multiple segmented sampling intervals. Therefore, each phase of the risk control model can be guaranteed to have objectively and truly distributed samples for iteration, so as to obtain a better iteration effect of the risk control model.

As an optional implementation, in step S23, an operation of iterating the first credit scorecard model according to the second prediction result and the multiple history samples, to obtain the target credit scorecard model includes the following steps.

At step S234, the fourth part sample is determined by means of the second prediction result.

At step S235, the fourth part sample and the multiple history samples are fused to obtain fused samples.

At step S236, the first credit scorecard model is iterated by using the fused samples, to obtain the target credit scorecard model.

Based on step S234 to step S236, the fourth part sample is determined according to the second prediction result. Then, the fourth part sample and the multiple history samples are fused to obtain the fused samples. Finally, the first credit scorecard model is iterated by using the fused samples, to obtain the target credit scorecard model. The input samples of the target credit scorecard model are objectively and truly distributed, so that the distinction degree of performance samples is higher, thereby achieving the optimization of the iteration effect of the risk control model.

Fig. 5 is a schematic diagram of a flow diversion mechanism according to an embodiment of the present invention. As shown in Fig. 5, at the pre-loan phase, the to-be-classified samples are divided into the first part sample and the second part sample according to a preset division proportion. The preset division proportion is 9:1, that is, 90% of the to-be-classified samples are divided to the first part sample, and 10% of the to-be-classified samples are divided to the second part sample. Segmented sampling is performed on the second part sample to obtain the fourth part sample, that is, iteration samples. Specifically, for division processes of the in-loan phase and the post-loan phase, refer to the division process of the pre-loan phase, which are not described again.

In the technical solution of the present invention, the involved processing such as acquisition, storage, application, processing, transmission, providing, and invention of personal information of the user are in compliance with relevant laws and regulations, and does not violate public order and good customs.

From the above descriptions about the implementation modes, those skilled in the art may clearly know that the method according to the foregoing embodiments may be implemented in a manner of combining software and a necessary universal hardware platform, and of course, may also be implemented through hardware, but the former is a preferred implementation mode under many circumstances. Based on such an understanding, the technical solutions of the present invention substantially or parts making contributions to the conventional art may be embodied in form of a software product, and the computer software product is stored in a storage medium, including multiple instructions for causing a terminal device (which may be a mobile phone, a computer, a server, a network device or the like) to execute the method in each embodiment of the present invention.

The present invention further provides an apparatus for iterating a credit scorecard model. The apparatus is configured to implement the foregoing embodiments and the preferred implementation, and what has been described will not be described again. As used below, the term "module" may be a combination of software and/or hardware that implements a predetermined function. Although the apparatus described in the following embodiments is exemplary implemented in software, but implementations in hardware, or a combination of software and hardware, are also possible and conceived.

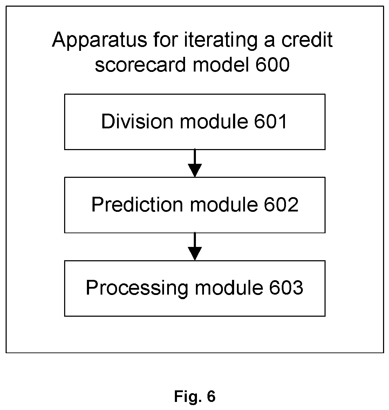

Fig. 6 is a structural block diagram of an apparatus for iterating a credit scorecard model according to one of the embodiments of the present invention. As shown in Fig. 6, the apparatus 600 for iterating the credit scorecard model includes a division module, a prediction module, and a processing module.

The division module 601 is configured to divide multiple to-be-classified samples into a first part sample and a second part sample.

The prediction module 602 is configured to classify the first part sample by using a first credit scorecard model to obtain a first prediction result, and classify the second part sample by using the first credit scorecard model to obtain a second prediction result. The first credit scorecard model is an initial credit scorecard model of a current phase.

The processing module 603 is configured to determine an input sample of a second credit scorecard model based on the first prediction result and the second prediction result, and iterate the first credit scorecard model according to the second prediction result and multiple history samples, to obtain a target credit scorecard model. The second credit scorecard model is an initial credit scorecard model of a next phase, and the multiple history samples are modeling samples of the first credit scorecard model.

Optionally, the apparatus 600 for iterating the credit scorecard model further includes: a filter module 604, configured to filter multiple candidate samples by using a blacklist manner, to obtain the multiple to-be-classified samples.

Optionally, the prediction module 602 is further configured to: classify the first part sample by using the first credit scorecard model to obtain a prediction probability of each sample in the first part sample, and classify the second part sample by using the first credit scorecard model to obtain a prediction probability of each sample in the second part sample.

Optionally, the processing module 603 is further configured to: select a third part sample from the first part sample by using a comparison result of the prediction probability of each sample in the first part sample and a preset probability threshold; select a fourth part sample from the second part sample by performing segmented sampling on the prediction probability of each sample in the second part sample; and determine the third part sample and the fourth part sample as the input sample of the second credit scorecard model.

Optionally, the processing module 603 is further configured to: determine multiple overdue rates based on the prediction probability of each sample in the second part sample; determine multiple segmented sampling intervals by using the multiple overdue rates; and randomly select the fourth part sample from the second part sample according to the overdue rate corresponding to each of the multiple segmented sampling intervals.

Optionally, the processing module 603 is further configured to: determine the fourth part sample by means of the second prediction result; fuse the fourth part sample and the multiple history samples to obtain fused samples; and iterate the first credit scorecard model by using the fused samples, to obtain the target credit scorecard model.

Optionally, the first credit scorecard model includes one of the following: an application scorecard model, a behavior scorecard model, and a collection scorecard model.

It is to be noted that, each of the above modules may be implemented by software or hardware. For the latter, it may be implemented in the following manners, but is not limited to the follow: the above modules are all located in a same processor; or the above modules are located in different processors in any combination.

Another embodiment of the present invention further provides an electronic device. The electronic device includes a memory and at least one processor. The memory is configured to store at least one computer instruction. The processor is configured to run the at least one computer instruction to perform steps in the above method embodiments.

Optionally, the electronic device may further include a transmission device and an input/output device. The transmission device is connected with the processor. The input/output device is connected with the processor.

Optionally, in the present invention, the processor may be configured to perform the following steps through the computer instruction.

At step S1, multiple to-be-classified samples are divided into a first part sample and a second part sample.

At step S2, the first part sample is classified by using a first credit scorecard model to obtain a first prediction result, and the second part sample is classified by using the first credit scorecard model to obtain a second prediction result.

At step S3, an input sample of a second credit scorecard model is determined based on the first prediction result and the second prediction result, and the first credit scorecard model is iterated according to the second prediction result and multiple history samples, to obtain a target credit scorecard model.

Optionally, for specific examples in this embodiment, refer to the examples described in the foregoing embodiments and the optional implementations, and this embodiment will not be repeated thereto.

Another embodiment of the present invention further provides a non-transitory computer-readable storage medium storing at least one computer instruction. The non-transitory computer-readable storage medium stores at least one computer instruction. Steps in the above method embodiments are performed when the computer instruction is run.

Optionally, in this embodiment, the non-transitory computer-readable storage medium may be configured to store a computer program for performing the following steps.

At step S1, multiple to-be-classified samples are divided into a first part sample and a second part sample.

At step S2, the first part sample is classified by using a first credit scorecard model to obtain a first prediction result, and the second part sample is classified by using the first credit scorecard model to obtain a second prediction result.

At step S3, an input sample of a second credit scorecard model is determined based on the first prediction result and the second prediction result, and the first credit scorecard model is iterated according to the second prediction result and multiple history samples, to obtain a target credit scorecard model.

Optionally, in this embodiment, the non-transitory computer-readable storage medium may include, but is not limited to, an electronic, magnetic, optical, electromagnetic, infrared, or semiconductor system, device, or apparatus, or any foregoing suitable combinations. More specific examples of the readable storage medium may include electrical connections based on at least one wire=, a portable computer disk, a hard disk, a Random Access Memory (RAM), a Read-Only Memory (ROM), an Erasable Programmable Read-Only Memory (EPROM or flash memory), an optical fiber, a portable Compact Disk Read-Only Memory (CD-ROM), an optical storage device, a magnetic storage device, or any above suitable combinations.

Another embodiment of the present invention further provides a computer program product. Program codes used to implement the audio processing method of the present invention can be written in any combination of at least one programming language. These program codes can be provided to the processors or controllers of general computers, special computers, or other programmable data processing devices, so that, when the program codes are performed by the processors or controllers, functions/operations specified in the flowcharts and/or block diagrams are implemented. The program codes can be performed entirely on a machine, partially performed on the machine, and partially performed on the machine and partially performed on a remote machine as an independent software package, or entirely performed on the remote machine or a server.

In the above embodiments of the present invention, the description of the embodiments has its own focus. For parts that are not described in detail in a certain embodiment, reference may be made to related descriptions of other embodiments.

In the several embodiments provided in the present invention, it should be understood that, the disclosed technical content can be implemented in other ways. The apparatus embodiments described above are illustrative. For example, the division of the units may be a logical function division, and there may be other divisions in actual implementation. For example, multiple units or components may be combined or integrated into another system, or some features can be ignored, or not implemented. In addition, the displayed or discussed mutual coupling or direct coupling or communication connection may be indirect coupling or communication connection through some interfaces, units or modules, and may be in electrical or other forms.

The units described as separate components may or may not be physically separated. The components displayed as units may or may not be physical units, that is, the components may be located in one place, or may be distributed on the multiple units. Part or all of the units may be selected according to actual requirements to achieve the purposes of the solutions of this embodiment.

In addition, the functional units in the various embodiments of the present invention may be integrated into one processing unit, or each unit may exist alone physically, or at least two units may be integrated into one unit. The above integrated unit can be implemented in the form of hardware, or can be implemented in the form of a software functional unit.

If the integrated unit is implemented in the form of the software functional unit and sold or used as an independent product, it can be stored in the computer readable storage medium. Based on this understanding, the technical solutions of the present invention essentially or the parts that contribute to the prior art, or all or part of the technical solutions can be embodied in the form of a software product. The computer software product is stored in a storage medium, including multiple instructions for causing a computer device (which may be a personal computer, a server, or a network device, and the like) to execute all or part of the steps of the method described in the various embodiments of the present invention. The foregoing storage medium includes a USB flash disk, a Read-Only Memory (ROM), a Random Access Memory (RAM), and various media that can store program codes, such as a mobile hard disk, a magnetic disk, or an optical disk.

The above description are exemplary implementations of the present invention, and it should be noted that persons of ordinary skill in the art may also make several improvements and refinements without departing from the principle of the present invention, and it should be considered that these improvements and refinements shall all fall within the protection scope of the present invention.

## Claims

1. A method for iterating a credit scorecard model, comprising:
dividing a plurality of to-be-classified samples into a first part sample and a second part sample;
classifying the first part sample by using a first credit scorecard model to obtain a first prediction result, and classifying the second part sample by using the first credit scorecard model to obtain a second prediction result, wherein the first credit scorecard model is an initial credit scorecard model of a current phase; and
determining an input sample of a second credit scorecard model based on the first prediction result and the second prediction result, and iterating the first credit scorecard model according to the second prediction result and a plurality of history samples, to obtain a target credit scorecard model, wherein the second credit scorecard model is an initial credit scorecard model of a next phase, and the plurality of history samples are modeling samples of the first credit scorecard model.

2. The method as claimed in claim 1, further comprising:
filtering a plurality of candidate samples by using a blacklist manner, to obtain the plurality of to-be-classified samples.

3. The method as claimed in claim 1, wherein classifying the first part sample by using the first credit scorecard model to obtain the first prediction result, and classifying the second part sample by using the first credit scorecard model to obtain the second prediction result comprises:
classifying the first part sample by using the first credit scorecard model to obtain a prediction probability of each sample in the first part sample, and classifying the second part sample by using the first credit scorecard model to obtain a prediction probability of each sample in the second part sample.

4. The method as claimed in claim 3, wherein determining the input sample of the second credit scorecard model based on the first prediction result and the second prediction result comprises:
selecting a third part sample from the first part sample by using a comparison result of the prediction probability of each sample in the first part sample and a preset probability threshold;
selecting a fourth part sample from the second part sample by performing segmented sampling on the prediction probability of each sample in the second part sample; and
determining the third part sample and the fourth part sample as the input sample of the second credit scorecard model.

5. The method as claimed in claim 4, wherein selecting the fourth part sample from the second part sample by performing segmented sampling on the prediction probability of each sample in the second part sample comprises:
determining a plurality of overdue rates based on the prediction probability of each sample in the second part sample;
determining a plurality of segmented sampling intervals by using the plurality of overdue rates; and
randomly selecting the fourth part sample from the second part sample according to a overdue rate corresponding to each of the plurality of segmented sampling intervals.

6. The method as claimed in claim 5, wherein iterating the first credit scorecard model according to the second prediction result and the plurality of history samples, to obtain the target credit scorecard model comprises:
determining the fourth part sample according to the second prediction result;
fusing the fourth part sample and the plurality of history samples to obtain fused samples; and
iterating the first credit scorecard model by using the fused samples, to obtain the target credit scorecard model.

7. The method as claimed in claim 1, wherein the first credit scorecard model comprises at least one of the following:
an application scorecard model, a behavior scorecard model, and a collection scorecard model.

8. An apparatus for iterating a credit scorecard model, comprising:
a division module, configured to divide a plurality of to-be-classified samples into a first part sample and a second part sample;
a prediction module, configured to classify the first part sample by using a first credit scorecard model to obtain a first prediction result, and classify the second part sample by using the first credit scorecard model to obtain a second prediction result, wherein the first credit scorecard model is an initial credit scorecard model of a current phase; and
a processing module, configured to determine an input sample of a second credit scorecard model based on the first prediction result and the second prediction result, and iterate the first credit scorecard model according to the second prediction result and a plurality of history samples, to obtain a target credit scorecard model, wherein the second credit scorecard model is an initial credit scorecard model of a next phase, and the plurality of history samples are modeling samples of the first credit scorecard model.

9. The apparatus as claimed in claim 8, further comprising:
a filter module, configured to filter a plurality of candidate samples by using a blacklist manner, to obtain the plurality of to-be-classified samples;
or, wherein the prediction module is further configured to:
classify the first part sample by using the first credit scorecard model to obtain a prediction probability of each sample in the first part sample, and classify the second part sample by using the first credit scorecard model to obtain a prediction probability of each sample in the second part sample;
or, wherein the first credit scorecard model comprises at least one of the following:
an application scorecard model, a behavior scorecard model, and a collection scorecard model.

10. The apparatus as claimed in claim 9, wherein the processing module is further configured to:
select a third part sample from the first part sample by using a comparison result of the prediction probability of each sample in the first part sample and a preset probability threshold;
select a fourth part sample from the second part sample by performing segmented sampling on the prediction probability of each sample in the second part sample; and
determine the third part sample and the fourth part sample as the input sample of the second credit scorecard model.

11. The apparatus as claimed in claim 10, wherein the processing module is further configured to:
determine a plurality of overdue rates based on the prediction probability of each sample in the second part sample;
determine a plurality of segmented sampling intervals by using the plurality of overdue rates; and
randomly select the fourth part sample from the second part sample according to a overdue rate corresponding to each of the plurality of segmented sampling intervals.

12. The apparatus as claimed in claim 11, wherein the processing module is further configured to:
determine the fourth part sample according to the second prediction result;
fuse the fourth part sample and the plurality of history samples to obtain fused samples; and
iterate the first credit scorecard model by using the fused samples, to obtain the target credit scorecard model.

13. An electronic device, comprising:
at least one processor, and
a memory, communicatively connected with the at least one processor, wherein
the memory is configured to store at least one instruction executable by the at least one processor, and the at least one instruction is performed by the at least one processor, to cause the at least one processor to perform the method as claimed in any one of claims 1 to 7.

14. A non-transitory computer readable storage medium, storing at least one computer instruction, wherein the at least one computer instruction is used for a computer to perform the method as claimed in any one of claims 1 to 7.

15. A computer program product, comprising a computer program, wherein the method as claimed in any one of claims 1 to 7 is implemented when the computer program is operated by a processor.
